# EUROPÄISCHE PATENTSCHRIFT

(11) **EP 1 318 715 B1**
(45) Veröffentlichungstag und Bekanntmachung des Hinweises auf die Patenterteilung: **17.08.2005**
(21) Anmeldenummer: 01965264.3
(22) Anmeldetag: 07.09.2001
(51) Int. Cl.: A01J 5/007, A01J 5/08

(54) **VERFAHREN UND VORRICHTUNG ZUM VERBESSERTEN AUSMELKEN EINES TIERES, INSBESONDERE EINER KUH**
METHOD AND DEVICE FOR THE IMPROVED MILKING OF AN ANIMAL, IN PARTICULAR OF A COW
PROCEDE ET DISPOSITIF POUR AMELIORER LA TRAITE D'UN ANIMAL, EN PARTICULIER D'UNE VACHE

(30) Priorität: 19.09.2000 DE 10046276
(43) Veröffentlichungstag der Anmeldung: 18.06.2003
(73) Patentinhaber: WestfaliaSurge GmbH, 59199 Bönen (DE)
(72) Erfinder: HENNIG, Bernd, 04509 Schönwölkau (DE)
(74) Vertreter: Neumann, Ditmar
(86) Internationale Anmeldenummer: PCT/EP2001/010330
(87) Internationale Veröffentlichungsnummer: WO 2002/023975

(56) Entgegenhaltungen:
- DE-A- 4 406 741
- DE-C- 19 636 314
- FR-A- 2 530 119

## Beschreibung

Die Erfindung betrifft ein Verfahren und eine Vorrichtung zum verbesserten Ausmelken eines Tieres, insbesondere einer Kuh, im Rahmen des maschinellen Melkens nach dem sogenannten Saugmelkprinzip.

Gegenüber dem traditionellen Handmelken, welches ein Druckmelkverfahren ist, und bei dem annähernd die gesamte im Euter vorhandene Milch gemolken werden kann, besteht bei dem maschinellen Saugmelkverfahren das Problem, daß ein vollständiges Ausmelken des Euters nicht oder schlecht möglich ist und deshalb Milchreste im Euter verbleiben können. Dies hat vor allem verfahrensbedingte, jedoch auch anatomische Ursachen. So kann es sein, daß durch abgeknickte oder verdrehte Zitzen des Euters, durch ungünstige Euterformen oder aber durch nicht auf die Zitzen genau passende Melkzeuge der Melkvorgang mittels dem Saugmelkverfahren derart negativ beeinflußt wird, daß die Milch führenden Kanäle in den Zitzen zu früh verschlossen werden. Hierdurch wird vor allem in den Endphasen des Melkvorganges, der Nachmelkphase und der Ausmelkphase, ein Melkertrag gegenüber dem Handmelken reduziert und auch die gemolkene Milchqualität kann negativ beeinflußt werden, da insbesondere in den Endphasen des Melkens besonders fetthaltige Milchbestandteile gewonnen werden.

Desweiteren liegt in den physikalischen Gegebenheiten des maschinellen Melkens im Saugmelkverfahren eine Ursache für den reduzierten Melkertrag gegenüber einem Melken von Hand. Durch den Druckabfall im Euter gegen Ende des Melkvorganges schließt sich das Eutergewebe in Reaktion auf diesen Druckabfall und verschließt hiermit auch die Milchleitkanäle im Zitzenbereich. Wegen des erhöhten Vakuums im Inneren des Zitzengummis eines Melkbechers aufgrund des nachlassenden Milchvolumenstromes gegen Ende des Melkvorganges kann eine Flüssigkeitsansammlung (Ödembildung) im Bereich des Fürstenbergschen Venenringes hervorgerufen werden. Durch diese Ödembildung kommt es in der Regel zu einem dauerhaften Verschluß der milchleitenden Kanäle in den Zitzen, welche lediglich durch eine höhere Zugkraft nach unten wieder geöffnet werden können. Dieser Effekt wird noch verstärkt durch den Beschleunigungsdruck und Fließdruck der Milchsäule. Dies führt in der Regel dazu, daß der Melkbecher an der Zitze nach oben zu klettern beginnt und ein frühzeitiges Einleiten der Aus- bzw. Nachmelkphase erfolgt und hierdurch der Melkvorgang schneller als gewünscht beendet wird.

Dies kann verhindert werden durch eine höhere Zugkraft des Melkbechers auf die Zitze nach unten, was allerdings schwierig ist, da dies zum Abfallen des Melkbechers von der Zitze führen kann. Insbesondere bei prallen Eutern und bei kurzen Zitzen können hier erhebliche Schwierigkeiten hinsichtlich der Haftung des Melkzeuges an den Zitzen auftreten.

Zudem sind zusätzliche Geräte erforderlich, um eine nach unten gerichtete Zugkraft auf die Melkzeuge aufzubringen, was bei den ohnehin schon beengten Platzverhältnissen die Bewegungsfreiheit einer Bedienperson der Melkanlage zusätzlich beschränkt. Außerdem ist ein zusätzlicher Geräteaufwand erforderlich und es müssen die Geräte nicht nur aufwendig bedient, sondern auch gereinigt und instandgehalten werden.

Die Merkmale der Oberbegriffe der Ansprüche 1 und 13 sind durch die DE-A-4 406 741 bekannt.

Es ist die Aufgabe der vorliegenden Erfindung, ein Verfahren und eine Vorrichtung zum verbesserten Melken von Milchresten bereitzustellen, das ein im wesentlichen vollständiges Ausmelken von im Euter vorhandener Milch ermöglicht, einfach zu bedienen ist und mit möglichst geringem Geräteaufwand auch an vorhandene Anlagen zum Saugmelken nachrüstbar ist.

Diese Aufgabe wird mit dem Verfahren nach Anspruch 1 bzw. mit der Vorrichtung gemäß Anspruch 13 gelöst. Vorteilhafte Weiterbildungen und Ausgestaltun gen der Erfindung sind Gegenstand der jeweiligen Unteransprüche.

Das erfindungsgemäße Verfahren zeichnet sich dadurch aus, daß der Milchvolumenstrom, der durch die Melkbewegung des Zitzengummis in einem Melkbecher dann über einstellbare Pulsationsphasen kontinuierlich erfaßt wird und bei einem Nachlassen des Volumenstromes der Milch die Zitzengummibewegung gezielt verändert wird. Durch diese Maßnahmen kann auf die spezifischen Probleme in den Endphasen des Melkvorganges derart eingewirkt werden, daß annähernd der gesamte Milchinhalt eines Euters ausgemolken werden kann. Sobald der Milchvolumenstrom nachzulassen beginnt, wird die Bewegung des Zitzengummis gezielt so verändert, daß die Druckveränderung in dem Melkbecher bzw. dem Zitzengummi und damit auch in den milchleitenden Kanälen von der Zitze weniger abrupt ist, wodurch die ansonsten sofort eintretende Gewebereaktion des Euters, welche das Verschließen der Milchgänge zur Folge hat, herausgezögert werden kann. Hierdurch können auch Restmilchbestände ausgemolken werden, die ansonsten nur mittels dem manuellen Melken (Druckverfahren) ermolken werden konnten. Dadurch, daß erst relativ spät die milchleitenden Kanäle in der Zitze den Melkvorgang unweigerlich beendend geschlossen werden, kommt es insgesamt zu einer Erhöhung des Melkertrages und auch qualitativ hochwertige Milchbestandteile sind durch das Verfahren in maschineller Weise melkbar. Das gesamte gemolkene Milchvolumen eines Euters hat auch durch den hohen Fettgehalt eine höhere Milchqualität Die Änderung der Zitzengummibewegung kann an sämtlichen Melkbechern des Melkzeuges gleichzeitig erfolgen. Dies ist jedoch nicht zwingend. Vorteilhafterweise werden einzelne oder mehrere Zitzengummis hinsichtlich ihrer Bewegung verändert. Hierbei kann die Veränderung gleich- oder ungleichmäßig sein.

Nach einer vorteilhaften Ausgestaltung der Erfindung wird die Zitzengummibewegung erst dann gezielt verändert, wenn ein voreingestellter Schwellenwert des Milchvolumenstromes über eine bestimmte Zeitdauer unterschritten wird. Ein solcher Schwellenwert kann individuell auf einzelne Tierarten, einzelne Tiere, Laktationsphase oder auch saisonabhängig eingestellt werden und beispielsweise über Experimente oder anhand von Erfahrungswerten in der Praxis ermittelt werden. Hierdurch wird vermieden, daß schon bei einem leichten Sinken des Milchvolumenstromes während der Hauptmelkphase fälschlicherweise das erfindungsgemäße Ausmelkverfahren bzw. Nachmelkverfahren eingeleitet wird.

Nach einer weiteren vorteilhaften Ausgestaltung der Erfindung wird die Zeitdauer der Pulsationsphasen (A) erhöht. Hierdurch wird der Puls der Saugmelkphase reduziert, so daß ein Verschließen der Milchkanäle aufgrund der Reaktion des Fürstenbergschen Venenringes herausgezögert werden kann. Ein Verändern der Pulsationsphasendauer kann auf einfache Weise ohne großen zusätzlichen Geräteaufwand umgesetzt werden.

Nach einer weiteren vorteilhaften Ausgestaltung der Erfindung wird die Pulsationsintensität des Gummis im Beginn der Phasen (B) verringert, so daß die Druckbildung im Inneren der Zitze abgeschwächt wird.

Nach einer weiteren vorteilhaften Ausgestaltung der Erfindung wird die Zitzengummivorspannung verändert. Sobald der Volumenstrom nachläßt, wird hierdurch gezielt auf die Melkbewegung Einfluß genommen, indem das Zitzengummi selbst beispielsweise entspannt wird, wodurch bei gleichbleibender pneumatischer Betätigung des Zitzengummis dennoch ein abgeschwächtes Saugmelken erreicht werden kann. Dies hat in seiner Wirkung die gleichen Effekte wie oben beschrieben.

Nach einer weiteren vorteilhaften Ausgestaltung der Erfindung wird das Verfahren zum Einleiten einer Dauerentlastungsphase des Zitzengummis verwendet. Das Verfahren gewährleistet so einen melkertragsmäßig verbesserten Übergang zwischen der Hauptmelkphase, der Nach- bzw. Ausmelkphase und der daran anschließenden Dauerentlastungsphase in der Weise, daß ein im wesentlichen vollständiges Ausmelken bzw. Entleeren des Euters gewährleistet ist. Nach einem diesbezüglichen Aspekt der Erfindung verlaufen die konventionelle Hauptmelkphase und die erfindungsgemäße Nachmelk- bzw. Ausmelkphase mit ihrer gezielt veränderbaren Zitzengummibewegung zeitweise parallel. Hierdurch können weitere Melkeitragssteigerungen erreicht werden, beispielsweise indem bei wieder zunehmendem Milchvolumenstrom übergangslos wieder in eine Hauptmelkphase mit der konventionellen Pulsationsintensität und -dauer übergangen werden kann. Diese vorteilhafte Ausgestaltung der Erfindung ist vorzugsweise bei viertelindividuellem Nachmelken anwendbar.

Nach einer noch weiteren vorteilhaften Ausgestaltung der Erfindung wird mit abnehmendem Milchvolumenstrom die Intensität der Veränderungen der Zitzengummibewegung proportional erhöht Je stärker der Milchvolumenstrom abnimmt, desto stärker werden die Maßnahmen durchgeführt, mit welchen verhindert wird, daß aufgrund der in den Endphasen des Melkvorganges bestehenden physikalischen Gegebenheiten die Milchleitkanäle zu früh schließen.

Nach einer weiteren vorteilhaften Ausgestaltung der Erfindung wird der Milchvolumenstrom separat für einzelne Zitzen gemessen und die Zitzengummibewegung separat in Abhängig des entsprechenden Milchvolumenstromes gesteuert. Hierdurch kann auch bei kranken oder ungleichmäßig arbeitende Zitzen das erfindungsgemäße Verfahren zur Erhöhung des Milchertrages insgesamt vorteilhaft eingesetzt werden.

Die Vorrichtung zum Melken von Milchresten für ein möglichst vollständiges Ausmelken von vorhandener Milch gemäß der Erfindung weist einen Melkbecher und einen darin befestigten Zitzengummi auf, das über Sauganschlüsse in dem Becher über einen Unterdruck in eine pulsierende Melkbewegung unterschiedlicher Intensität versetzbar ist und an seinem unteren Ende einen Milchauslaß für einen Milchvolumenstrom aufweist, wobei ein Meßgerät vorgesehen ist zum Erfassen des Milchvolumenstroms und mittels einer Steuereinheit die Zitzengummibewegung in Abhängigkeit von einer Veränderung des gemessenen Milchvolumenstromes gezielt steuerbar ist. Dies hat den wesentlichen Vorteil, daß auch in den Endphasen des Melkvorganges noch optimal gemolken werden kann bei einem äußerst geringen Geräteaufwand und somit größere Melkerträge als bisher erzielbar sind. Zudem ist keinerlei im Melkbereich störender zusätzlicher Geräteaufwand erforderlich, da die Volumenstrommeßgeräte platzsparend entweder direkt am Melkbecher, direkt im Melkbecher selbst oder auch entfernt von dem Melkbecher in der Leitung für den Milchvolumenstrom angeordnet werden können. Die Steuereinheit kann selbstverständlich auch entfernt vom eigentlichen Zitzen- und damit Melkbereich angeordnet sein. Somit kann auf einfachste Weise und mit nur geringen Kosten eine wesentlich verbesserte Saugmelkvorrichtung bereitgestellt werden, mit der höhere Erträge als bisher erzielbar sind.

Nach einer vorteilhaften Ausgestaltung der erfindungsgemäßen Vorrichtung ist im Inneren des Melkbechers ein Manipulator vorgesehen, zum Verändern der Zitzen gummivorspannung. Der Manipulator kann hierbei beliebig mechanisch, pneumatisch , hydraulisch oder auch elektrisch betätigt werden und ist durch seine Anordnung im Inneren des Melkbechers vor Verschmutzung sicher und ohne störenden Einfluß auf die Handhabung und das Anbringen der Melkvorrichtung angeordnet. Hierbei hat die pneumatische Betätigung des Manipulators den wesentlichen Vorteil, daß ohnehin die für das Erzeugen des Saugunterdruckes in konventionellen Saugdruckmelkvorrichtungen erforderlichen pneumatischen Geräte vorhanden sind.

Nach einer noch weiteren vorteilhaften Ausgestaltung der Erfindung ist zwischen dem Zitzengummi und dem Melkbecher ein oder mehrere druckluftbeaufschlagbare Luftkissen vorgesehen. Das Luftkissen kann dabei so ausgebildet sein, daß eine verbesserte Beeinflussung der Zitzengummibewegung auf ein Verhindern des Verschließens von milchleitenden Kanälen in der Zitze möglich ist. Ein derartiges Luftkissen ist in dem ohnehin vorhandenen Platz im Inneren des Melkbechers geschützt vor äußeren Einflüssen untergebracht. Es kann auch dazu benutzt werden, um Zitzenbewegungsvorgänge nachzubilden, die beim Melken von Hand durch die Melkperson in den Endphasen des Melkvorganges konventionellerweise ausgeführt werden.

Nach einer weiteren vorteilhaften Ausgestaltung der Erfindung kann an einer Steuereinheit der Vorrichtung die Pulsationsdauer, die Pulsationsintensität und der Pulsationsverlauf über die Zeit in Abhängigkeit von einer Veränderung des Milchvolumenstromes eingestellt und entsprechend gesteuert werden. Hierzu sind gängige Bedien- und Anzeigeelemente an der Steuereinheit vorgesehen. Auf diese Weise kann mit der erfindungsgemäßen Vorrichtung individuell abgestimmt auf einzelne Tiere, Tierarten oder Euterbereiche die Nachmelkphase auf einen erhöhten Ertrag hin ausgerichtet werden, und es ist auch möglich, experimentell durch Verändern der einstellbaren Parameter der Steuereinheit weitere Ertragssteigerungen mit der Vorrichtung zu erzielen.

Ein bevorzugtes Ausführungsbeispiel der Erfindung wird im folgenden unter Bezugnahme auf die Zeichnung detailliert beschrieben. In der Zeichnung zeigen:
- Fig. 1: eine schematische Darstellung eines Ausführungsbeispiels der Melkvorrichtung nach der Erfindung mit vier Melkbechern und zentraler Steuereinheit;
- Fig. 2: einen Melkbecher aus Fig. 1 in geschnittener Seitenansicht mit Volumenstrommeßgerät und Luftkissenmanipulator und
- Fig. 3: schematisch den Verlauf des Vakuums im Pulsraum.

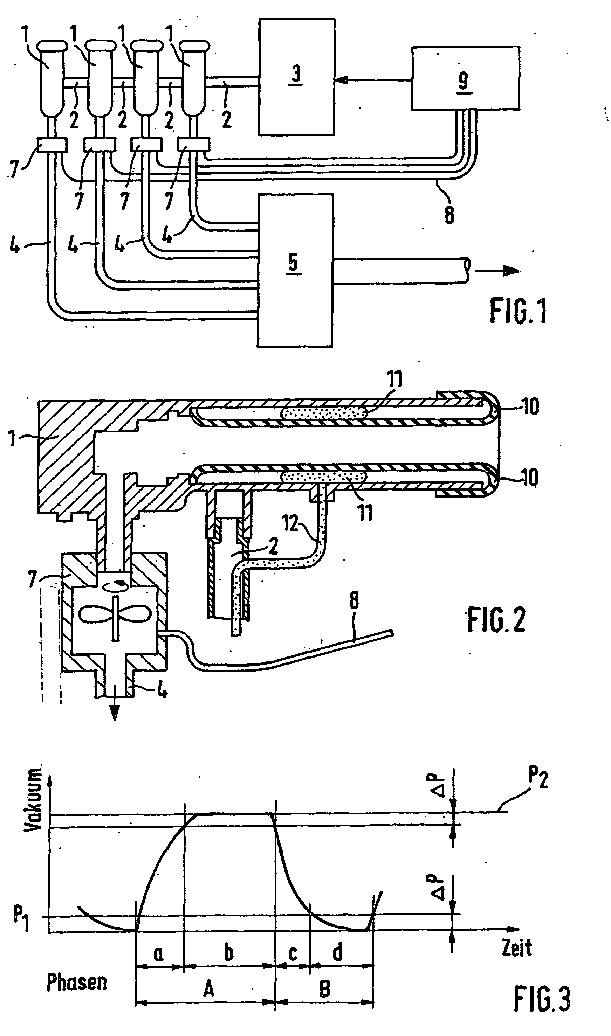

Fig. 1 stellt vereinfacht die Gesamtvorrichtung mit den wesentlichen Vorrichtungselementen dar. Vier Melkbecher 1 sind über jeweilige Saugleitungen 2 mit einer Unterdruckeinrichtung 3 pneumatisch so verbunden, daß ein in dem Melkbecher erzeugter Unterdruck einen im Innern des Melkbechers angeordnetes Zitzengummi in eine pulsierende Melkbewegung versetzt. An ihrem unteren Ende weisen die Melkbecher 1 jeweils eine Milchleitung 4 auf, die unterdruckführend ist und durch welche Milch zu einem Sammelbehälter 5 geführt wird, von dem die Milch über eine Milchsammelleitung 6 weiter zu einem in der Zeichnung nicht dargestellten Tank geleitet wird. Zwischen den Milchbechern 1 und den Milchleitungen 4 ist jeweils ein Volumenstrommeßgerät 7 zwischengeschaltet, über welches zitzenseparat gemolkene Milchvolumenströme gemessen werden können. Die Meßgeräte 7 sind über Meßleitungen 8 mit einer Überwachungs- und Steuereinheit 9 verbunden, die ihrerseits wieder in Verbindung mit der Unterdruckeinrichtung 3 steht, um in Abhängigkeit von gemessenen Milchvolumeaströmen die in den Melkbechern 1 erzeugte Zitzengummibewegung zu variieren.

Läßt nun der gemessene Milchvolumenstrom am Ende eines Melkvorganges nach, so kann automatisch hierauf mit der Überwachungs- und Steuereinheit 9 so reagiert werden, daß ein Verschließen der milchleitenden Kanäle in der Zitze hinausgezögert wird, d. h. daß hierdurch ein frühzeitiges Verschließen der Kanäle vor dem vollständigen Ausmelken von vorhandener Milch vermieden werden kann.

In Fig. 2 ist ein erfindungsgemäßer Melkbecher aus Fig. 1 in geschnittener Seitenansicht mit einem Volumenstrommeßgerät 7 und einem Luftkissemnanipulator 11 dargestellt In dem Melkbecher 1 ist ein elastisch verformbares Zitzengummi 10 so befestigt, daß es über einen Unterdruck aus der Saugleitung 2 pulsierend bewegbar ist. An seinem unteren Auslaßende weist der Melkbecher 1 in Fließrichtung vor der Milchleitung 4 ein zwischengeschaltetes Volumenstrommeßgerät 7 auf. Vom Volumenstrommeßgerät wird über eine Meßleitung 8 der gemessene Volumenstrom an eine in der Fig. 2 nicht dargestellte Überwachungs- und Steuereinheit geleitet Bei diesem Ausführungsbeispiel ist als Manipulator der Zitzengummibewegung ein Luftkissen 11 im Innern des Melkbechers 1 zwischen dem Melkbecher 1 und dem Zitzengummi 10 vorgesehen. Das Luftkissen 11 ist über eine Druckleitung 12 betätigbar, um bei nachlassendem Volumenstrom mittels der Steuereinheit betätigt zu werden, so daß ein Verschließen der milchleitenden Kanäle aufgrund des bei nachlassendem Milchvolumenstrom zunehmenden Vakuums verhindern zu können. Bei diesem Beispiel ist als Manipulator zwar ein Luftkissen 11 vorgesehen. Es versteht sich jedoch von selbst, daß jedwedes andere Mittel einsetzbar ist, um bei nachlassendem Milchvolumenstrom in Abhängigkeit von diesem die Bewegung des Zitzengummis gezielt zu verändern. Beispiele hierfür sind eine Veränderung des Saugdruckes in der Saugleitung 2, ein Verändern der Pulsation zwischen Saug- und Pausenphasen, ein ansteigendes oder abfallendes Verändern vom Saugdruck in den Pulsationsphasen oder ein mechanisches Verändern der Zitzengummivorspannung.

Figur 3 zeigt schematisch den Verlauf des Vakuums im Pulsraum. Während der Phase a steigt das Vakuum im Pulsraum des Zitzenbechers von einem Vakuum P1 auf das höchste Vakuum P2 im Pulsraum vermindert um ΔP an. Diese Phase a kann auch als Evakuierungsphase bezeichnet werden. Die Druckdifferenz ΔP liegt vorzugsweise bei 4 kPa. Mit der Phase b wird eine Zeitspanne bezeichnet, in der das Vakuum im Pulsraum oberhalb des maximalen Vakuums P2 vermindert um ΔP liegt. Die Phase b kann als die Vakuumphase bezeichnet werden. An die Phase b schließt sich die Phase c an, in der das Vakuum auf P1 abfällt. Während der Phase c findet eine Belüftung statt. Die Zeitspanne, in der das Vakuum im Pulsraum unterhalb von P1 liegt, ist als Phase d bezeichnet. Hierbei kann von einer Druckphase gesprochen werden.

Die Ausprägung beziehungsweise Dauer der Phasen a, b bzw. c, d können unterschiedlich lang sein. Mit A ist die Zeitspanne bezeichnet, die die Phasen a und b umfaßt. Hierbei handelt es sich um eine Saugphase, wobei das Verhältnis der Phasen a und b zueinander unterschiedlich sein kann. Im Sinne der Erfindung kann die Saugphase A auch lediglich die Vakuumphase b beziehungsweise die Evakuierungsphase a umfassen.

Mit B ist in der Figur 3 beispielhaft die Pausenphase dargestellt, die die beiden Phasen c und d umfaßt Dies ist nicht zwingend notwendig. Die Pausenphase B kann auch lediglich die Dauer der Belüftungsphase c beziehungsweise der Druckphase d umfassen.

### Bezugszeichenliste

- 1: Melkbecher
- 2: Saugleitung
- 3: Unterdruckeinrichtung
- 4: Milchleitung
- 5: Sammelbehälter
- 6: Milchsammelleitung
- 7: Volumenstrommeßgerät
- 8: Meßleitungen
- 9: Überwachungs- und Steuereinheit
- 10: Zitzengummi
- 11: Luftkissen
- 12: Druckleitung

## Patentansprüche

1. Verfahren zum Melken von Milchresten für ein möglichst vollständiges Ausmelken von im Euter vorhandener Milch, insbesondere in den Endphasen des Melkvorganges, bei welchem ein Zitzengummi (10) in einem Melkbecher (1) durch einen Saugunterdruck über einstellbare Pulsationsphasen bestehend aus abwechselnden Saugphasen (A) und Pausenphasen (C, D) und einer Pulsationsintensität in eine Melkbewegung versetzt wird, um einen Milchvolumenstrom zu erzeugen, **dadurch gekennzeichnet, daß** der Milchvolumenstrom kontinuierlich erfaßt und bei nachlassendem Volumenstrom die Zitzengummibewegung gezielt verändert wird.

2. Verfahren nach Anspruch 1, **dadurch gekennzeichnet, daß** bei Unterschreiten eines voreingestellten Schwellenwertes des Volumenstroms über eine Zeitdauer (t) die Zitzengummibewegung verändert wird.

3. Verfahren nach Anspruch 1 oder 2, **dadurch gekennzeichnet, daß** die Zeitdauer der Pulsationsphasen (A) erhöht wird.

4. Verfahren nach einem der vorherigen Ansprüche, **dadurch gekennzeichnet, daß** die Pulsationsintensität im Beginn der Phasen (B) verringert wird

5. Verfahren nach einem der vorherigen Ansprüche, **dadurch gekennzeichnet, daß** das Vakuum im Melkbecherinnenraum verringert wird.

6. Verfahren nach einem der vorherigen Ansprüche, **dadurch gekennzeichnet, daß** die Zitzengummivorspannung verändert wird.

7. Verfahren nach einem der vorherigen Ansprüche, **gekennzeichnet durch** Anwenden des Verfahrens zum Ausmelken oder Nachmelken aller Tierarten.

8. Verfahren nach einem der vorherigen Ansprüche, **gekennzeichnet durch** Verwenden zum Einleiten einer Dauerentlastungsphase (D) des Zitzengummis.

9. Verfahren nach Anspruch 8, **gekennzeichnet durch** zeitweises parallel Verlaufen von einer konventionellen Hauptmelkphase und einer Nachmelk- oder Ausmelkphase mit gezielt veränderter Zitzengummibewegung (Zuschaltung).

10. Verfahren nach Anspruch 8 oder 9, **gekennzeichnet durch** erneutes kurzes Nachmelken nach der Dauerentlastungsphase.

11. Verfahren nach einem der vorherigen Ansprüche, **dadurch gekennzeichnet, daß** mit abnehmendem Milchvolumenstrom die Intensität der Veränderung der Zitzengummibewegung proportional erhöht wird.

12. Verfahren nach einem der vorherigen Ansprüche, **dadurch gekennzeichnet, daß** für einzelne Zitzen der Milchvolumenstrom separat gemessen wird und die Zitzengummibewegung separat in Abhängigkeit des jeweiligen Zitzenmilchvolumenstromes steuerbar ist.

13. Vorrichtung zum Melken von Milchresten für ein möglichst vollständiges Ausmelken von im Euter vorhandener Milch, mit einem Melkbecher (1) und einem darin befestigten Zitzengummi (10), welches über Sauganschlüsse in dem Becher (1) mittels Unterdruck in eine pulsierende Melkbewegung unterschiedlicher Intensität versetzbar ist und an seinem unteren Ende einen Milchauslaß für einen Milchvolumenstrom aufweist, insbesondere zur Durchführung des Verfahrens nach einem der Ansprüche 1 bis 12, **dadurch gekennzeichnet, daß** ein Meßgerät zum kontinuierlichen Erfassen des Milchvolumenstroms vorgesehen ist und mittels einer Steuereinheit (9) die Zitzengummibewegung in Abhängigkeit von einem nachlassenden Milchvolumenstrom gezielt steuerbar ist.

14. Vorrichtung nach Anspruch 13, **dadurch gekennzeichnet, daß** im Innern des Melkbechers (1) ein Manipulator (11) vorgesehen ist, zum Verändern der Zitzengummivorspannung.

15. Vorrichtung nach Anspruch 14, **dadurch gekennzeichnet, daß** der Manipulator (11) mechanisch, pneumatisch, hydraulisch oder elektrisch angetrieben ist

16. Vorrichtung nach Anspruch 13, 14 oder 15, **dadurch gekennzeichnet, daß** zwischen dem Zitzengummi (10) und dem Melkbecher (1) mit Druckluft beaufschlagbare Luftkissen (11) vorgesehen sind.

17. Vorrichtung nach einem der Ansprüche 13 bis 16, **dadurch gekennzeichnet, daß** an der Steuereinheit (9) die Pulsationsdauer, die Pulsationsintensität und der Pulsationsverlauf in Abhängigkeit von einer Veränderung des Milchvolumenstroms einstellbar und steuerbar ist.

## Claims

1. Method for milking of milk residues for almost completely milking-out of milk present in the udder, especially in the end phases of the milking process, in which a teat rubber (10) in a milk cup (1) is put into a milking movement by a reduced suction pressure through adjustable pulsation phases consisting of alternating suction phases (A) and pause phases (C, D) and through a pulsation intensity, in order to produce a milk volume flow, **characterized in that** the milk volume flow is continuously measured, and when the volume flow is reduced, the movement of the teat rubber is altered in a targeted manner.

2. Method according to claim 1, **characterized in that** when the volume flow goes below a predetermined threshold value over a time duration (t), the teat rubber movement is altered.

3. Method according to claim 1 or 2, **characterized in that** the time duration of the pulsation phases (A) is increased.

4. Method according to one of the previous claims, **characterized in that** the pulsation intensity is reduced in the beginning of phases (B).

5. Method according to one of the previous claims, **characterized in that** the vacuum inside the space in the milk cup is reduced.

6. Method according to one of the previous claims, **characterized in that** the teat rubber pre-tensioning is altered.

7. Method according to one of the previous claims, **characterized by** the use of the method for milking-out or post-milking of all types of animal species.

8. Method according to one of the previous claims, **characterized by** the use for introducing a continuous unloading phase (D) of the teat rubber.

9. Method according to claim 8, **characterized by** timewise parallel processes of a conventional main milking phase and a post-milking or milking-out phase with a teat rubber movement altered in a targeted manner (connection).

10. Method according to claim 8 or 9, **characterized by** renewed brief post-milking after the continued unloading phase.

11. Method according to one of the previous claims, **characterized in that** with decreasing milk volume flow the intensity of the change in the teat rubber movement is increased proportionately.

12. Method according to one of the previous claims, **characterized in that** the milk volume flow is measured separately for individual teats and the teat rubber movements can be controlled separately, depending on the respective teat milk volume flow.

13. Device for milking of milk residues for an almost complete milking-out of the milk present in the udder, with a milk cup (1) and a teat rubber (10) secured in it, which can be displaced through suction connections in the cup (1) with reduced pressure into a pulsating milking movement of different intensities, and has a milk outlet for a milk volume flow at its lower end, especially for carrying out the process according to one of claims 1 to 12, **characterized in that** a measuring equipment is provided for continuously measuring the milk volume flow and, with the aid of a control unit (9), the teat rubber movement can be controlled in a targeted manner as a function of change in the milk volume flow.

14. Device according to claim 13, **characterized in that** a manipulator (11) is provided inside the milk cup (1) to alter the pre-tensioning of the teat rubber.

15. Device according to claim 14, **characterized in that** the manipulator (11) is operated mechanically, pneumatically, hydraulically or electrically.

16. Device according to claim 13, 14 or 15, **characterized in that** air cushions (11) that can be loaded with compressed air, are provided between the teat rubber (10) and the milk cup (1).

17. Device according to one of claims 13 to 16, **characterized in that** the pulsation duration, the pulsation intensity and the course of pulsation can be adjusted and controlled at the control unit (9) as a function of a change in the milk volume flow.

## Revendications

1. Procédé pour traire des résidus de lait pour un égouttage le plus complet que possible de lait se trouvant dans le pis, notamment dans les phases terminales de l'opération de traite, dans lequel une tétine en caoutchouc (10) dans un gobelet trayeur (1) est déplacée en un mouvement de traite par une dépression d'aspiration à l'intermédiaire de phases de pulsation ajustables, consistant en des phases d'aspiration (A) et des phases de pause (C, D) alternantes et d'une intensité de pulsation, pour générer un flux de volume de lait, **caractérisé en ce que** le flux de volume de lait est détecté continuellement et le mouvement de la tétine en caoutchouc est modifié sélectivement lorsque le flux de volume diminue.

2. Procédé selon la revendication 1, **caractérisé en ce que** lorsque le flux de volume est inférieur à une valeur seuil présélectionnée, le mouvement de la tétine en caoutchouc est modifié par une période de temps (t).

3. Procédé selon la revendication 1 ou 2, **caractérisé en ce que** la période de temps des phases de pulsation (A) est augmentée.

4. Procédé selon l'une des revendications précédentes, **caractérisé en ce que** l'intensité de pulsation est diminuée en début des phases (B).

5. Procédé selon l'une des revendications précédentes, **caractérisé en ce que** le vide à l'intérieur du gobelet trayeur est réduit.

6. Procédé selon l'une des revendications précédentes, **caractérisé en ce que** la précontrainte de la tétine en caoutchouc est modifiée.

7. Procédé selon l'une des revendications précédentes, **caractérisé par** l'utilisation du procédé pour l'égouttage ou la post-traite de toutes les espèces animales.

8. Procédé selon l'une des revendications précédentes, **caractérisé par** l'utilisation pour initier une phase de décharge continue (D) de la tétine en caoutchouc.

9. Procédé selon la revendication 8, **caractérisé par** le déroulement temporaire parallèle d'une phase principale conventionnelle de traite et d'une phase de post-traite ou d'égouttage avec un mouvement de la tétine en caoutchouc modifié sélectivement (connexion).

10. Procédé selon la revendication 8 ou 9, **caractérisé par** une post-traite brève renouvelée après la phase de décharge continue.

11. Procédé selon l'une des revendications précédentes, **caractérisé en ce que** lorsque le flux de volume de lait diminue, l'intensité de la modification du mouvement de tétine en caoutchouc est augmentée proportionnellement.

12. Procédé selon l'une des revendications précédentes, **caractérisé en ce que** pour des tétines individuelles le flux de volume de lait est mesuré séparément et que le mouvement des tétines en caoutchouc peut être commandé séparément en fonction du flux de volume de lait de tétine respectif

13. Dispositif pour traire des résidus de lait pour un égouttage le plus complet que possible de lait se trouvant dans le pis, avec un gobelet trayeur (1) et une tétine en caoutchouc (10) fixée dans celui-ci, laquelle peut être déplacée en un mouvement de traite pulsant d'intensités différentes à l'intermédiaire de connexions d'aspiration dans le gobelet (1) au moyen d'une dépression, et qui à son extrémité inférieure a un orifice de sortie de lait pour un flux de volume de lait, notamment pour la mise en oeuvre du procédé selon l'une des revendications 1 à 12, **caractérisé en ce qu'**on a prévu un appareil de mesure pour détecter continuellement le flux de volume de lait et qu'au moyen d'une unité de commande (9) le mouvement de la tétine en caoutchouc peut être commandé sélectivement en fonction d'un flux de volume de lait en diminution.

14. Dispositif selon la revendication 13, **caractérisé en ce qu'**à l'intérieur du gobelet trayeur (1) il est prévu un manipulateur (11) pour modifier la précontrainte de la tétine en caoutchouc.

15. Dispositif selon la revendication 14, **caractérisé en ce que** le manipulateur (11) est entraîné de façon mécanique, pneumatique, hydraulique ou électrique.

16. Dispositif selon la revendication 13, 14 ou 15, **caractérisé en ce que** des coussins d'air (11) pouvant être chargés d'air comprimé sont prévus entre la tétine en caoutchouc (10) et le gobelet trayeur (1).

17. Dispositif selon l'une des revendications 13 à 16, **caractérisé en ce que** la durée de pulsation, l'intensité de pulsation et l'allure de pulsation peuvent être ajustées et commandées sur l'unité de commande en fonction d'un changement du flux de volume de lait.
